# EUROPEAN PATENT SPECIFICATION

(11) **EP 1 365 660 B1**
(45) Date of publication and mention of the grant of the patent: **12.09.2007**
(21) Application number: 01923957.3
(22) Date of filing: 05.03.2001
(51) Int. Cl.: A23J 3/34, A23J 3/16

(54) **PROCESS FOR PREPARATION OF PROTEIN-HYDROLYSATE FROM SOY FLOUR**
VERFAHREN ZUR HERSTELLUNG VON PROTEINHYDROLYSATE AUS SOJAMEHL
PROCEDE DE PREPARATION D'HYDROLYSAT DE PROTEINES A PARTIR DE FARINE DE SOJA

(43) Date of publication of application: 03.12.2003
(73) Proprietor: COUNCIL OF SCIENTIFIC AND INDUSTRIAL RESEARCH, New Delhi 110 001 (IN)
(72) Inventor: RAO, Appu, R., Ctl. Food Tech. Res. Inst., Karnataka 570 013 (IN); CHANDRASEKHARA, Hole N., Ctl. Food Tech. Res. Inst, Karnataka 570 013 (IN); GOVINDARAJU, Karadka, Ctl. Food Tech. Res. Inst., Karnataka 570 013 (IN); JOSEPH, Johny, Ctl. Food Tech. Res. Inst., Karnataka 570 013 (IN); MURTHY, Kolara S., Ctl. Food Tech. Res. Inst., Karnataka 570 013 (IN); PRAKASH, Vishweshwariah, Ctl. Food Tech. Res. Inst, Karnataka 570 013 (IN); SASTRY, Mysore C., Ctl. Food Tech. Res. Inst., Karnataka 570 013 (IN)
(74) Representative: Schwarz, Albin
(86) International application number: PCT/IN2001/000029
(87) International publication number: WO 2002/069733

(56) References cited:
- EP-A- 0 320 717
- EP-A- 0 480 104
- FR-A- 2 184 519
- US-A- 3 753 728
- US-A- 4 563 357
- US-A- 4 757 007

## Description

### TECHNICAL FIELD

The present invention relates to a process for the preparation of protein hydrolysate from soy flour using proteolytic enzyme of plant origin. Particularly, the present invention relates to a process for the preparation of protein hydrolysate from defatted soy flour using papain.

### BACKGROUND ART

Presently about 6.8 M tons of soybean is produced in India and extracted for oil and the solvent extracted flour is exported to foreign countries for feed purposes. By providing additional facilities for the hygienic processing of soybean in the solvent extraction units, it is possible to obtain edible grade defatted flour having the desired functional characteristics. After the recovery of oil, 4.9 M tons of soy flour is available in India for utilization. A small portion of the total soybean produced also finds its use for different edible grade flours, protein isolate and texturized products and the popularity of these products are greatly picking up globally. Soybean is an excellent source of protein, which contains about 40% protein. New manufacturing techniques for high quality soybean foods have been developed by lowering or destroying of the anti-nutritional factors such as trypsin inhibitors.

United States Patent No. 5180597 claimed a process for hydrolyzed vegetable protein with enhanced flavor, which contains no detectable level of monochlorodihydroxypropanol is described. In the above reference, wheat gluten is hydrolyzed using Prozyme 6 (a fungal protease) at a temperature of 40-50°C, pH 6.5-7.0, enzyme concentration of 0.1-2.0% of substrate for a time period of 4h. The hydrolyzed protein is treated with gaseous HCl for deamidation before the addition of acid for inactivating the enzyme. The drawback in such hydrolysis is that it is likely to lead to racemisation of amino acids and the addition of acid increases the salt content in the product.

United States Patent No. 5077062 claimed a low sodium, low mono sodium glutamate soy hydrolysate that is prepared from soy material such as soy flour, soy meal or soy grits using fungal protease in water. The hydrolysis is conducted in the absence of acid or base at 90°C for 2 h. After deactivating the enzyme and dewatering the mixture the resulting hydrolysate contains between 45 and 55 wt. % enzymatically hydrolyzed soy based protein with an average molecular weight of 670,000 ± 50,000. The fungal protease used is different from the enzyme used in the present invention. The process is energy intensive due to the high temperature (90°C) used.

United States Patent No.4757007 claimed a preparation of two hydrolyzed products using a protease from soy protein. The soy protein is hydrolyzed with papain or pepsin after precipitating with alcohol. The drawback of the process is it involves the separation of the mixture of hydrolyzed products. Hydrolysis is carried out using papain or pepsin. Acidification is carried out to bring down the pH to 2.5-5.0 to separate the two kinds of hydrolysates, which could lead to increase in salt content.

European Patent No.0148600 B 1 relates to the preparation of hydrolyzed protein from protein isolate after jet cooking or dynamic heating at 104°C for a few seconds and later cooled in a vacuum chamber before hydrolysis using bromelin. The protein was precipitated at its isoelectric point from an aqueous extract of the material before the hydrolysis. The drawback of the process is the starting material protein isolate, which is more expensive. The process is a multi step process, energy intensive. The process further needs machines like the jet cooker and a vacuum chamber.

European Patent No. 0223560 A2 claimed a method describing the separation of protein hydrolysates with meat and cheese flavor, from proteinaceous feed stocks (e.g. containing soybean, gluten, whey, casein, hemoglobin, yeast, cereal or microbial proteins) by stepwise hydrolysis using an endopeptidase followed by amino peptidase from *Streptococcus lactus.* The drawback of the process is that it is a multi-step process.

European Patent No. 0087246 B1 claimed a process for the hydrolysis of soybeans, wheat gluten and cotton seeds using fungal protease from *Aspergillus* and pancreatin (trypsin, chymotrypsin A, B and C, elastase and carboxypeptidase A and B) is described. Activated charcoal is used to treat the hydrolysate, which is used for nutritional improvement. The draw back of the process is it involves more steps.

European Patent No. 0187048 A2 described the preparation of soy protein hydrolysate with 0.25 to 2.5% degree of hydrolysis (DH) using microbial rennet *(Mucor miehei*) and to be used as an egg white substitute. The enzyme used in the process is different and involves very low DH of soy protein.

United Kingdom Patent No. 2053228A described a process for the production of soy protein hydrolysate from partially defatted soy material by hydrolysis with proteolytic enzyme. The drawback of the process is that due to partial defatting soy flour, left over oil comes in contact with protein phase, which could lead to off-flavors.

United States Patent No. 4,324,805 described a method for producing soy protein hydrolysate and oil from partially defatted soy material by hydrolysis with proteolytic enzyme. The soyflour is partially defatted by water washing at pH 3.5-4.5 and later hydrolyzed using water and a base to increase the pH. The DH is in the range of 8-12%. Oil is recovered from the wash water. Alcalase is the enzyme used. The drawback of the process is that it is a multi step process and due to partial defatting of soy flour, left over oil comes in contact with protein phase which could lead to off-flavors. Enzyme inactivation is done by addition of acid, which is likely to lead to increased salt content in the product.

United States Patent No. 3640725 described an enzymatic hydrolysis process for production of soy protein hydrolysates. The soy seeds are comminuted and heated at 90-140°C. Protease (fungal and bacterial) is added at 25-75°C. The fiber is separated and slurry has two phases- oil and aqueous phase. Aqueous phase is brought to pH 4.5 to precipitate the protein, which is then concentrated. The starting material is not defatted and hence the residual oil could come in contact with the aqueous phase, which could lead to off-flavors.

Canadian Patent No.905742 described a soy protein hydrolysate modified with pepsin to yield a product which in presence of water and sugar whips at a rapid rate to produce aerated products of low density.

European Patent No.0797928 A1 described a process for the manufacture of a soy protein hydrolysate with a protease used selectively to decompose glycinin at a pH of 1.5-2.5. The pH used in the process is very low and therefore differs from the pH used in the present invention. Further, the aim of the process is to achieve a low glycinin content which is not the case in the present invention.

Reference may be made to a published paper entitled "Industrial production and application of soluble enzymatic hydrolysate of soy protein", (Olsen, H.S., Adler Nissen, J. (1979), Process Biochemistry, 14(7), 6,8, 10-11) wherein a method for preparation of

EP 0 480 104 A relates to the preparation of a vegetable protein product having excellent solubility in aqueous solutions, wherein the protein product is prepared from isolated soy protein aqueous curd obtained by jet cooking.

US 4,563,357 A describes a process for the manufacture of soy protein isolate with reduced viscosity in high yield by protease treatment, which involves jet cooking as a unit operation.

FR 2 184 519 A relates to the preparation of protein hydrolysate using proteolytic enzymes for use as raw materials in other food products, wherein the process involves extrusion cooking of soy protein isolate. soy protein hydrolysate from soy flakes washed at pH 4.5 followed by hydrolysis using alcalase is described. The solubility of the substrate is low at the acidic pH which is likely to result in low yields. The enzyme used is different from the enzyme used in the present invention.

### OBJECTS OF THE INVENTION

The main object of the present invention is to provide a process for the preparation for the preparation of protein hydrolysate from soy four from plant based protease.

Another object of the present invention is to provide a process for the preparation of protein hydrolysate with specified degree of hydrolysis.

Still another object of the present invention is to provide a process for the preparation of protein hydrolysate soluble in water over a wide range of pH value.

Yet another object of the present invention is to provide a process for the preparation of protein hydrolysate which can be used for nutritional enrichment.

### SUMMARY OF THE PRESENT INVENTION

The invention provides a process for the preparation of protein hydrolysate from soy flour, said process comprising: hydrolyzing aqueous slurry of defatted soy flour containing 6-30% solid content w/v using proteolytic enzyme of plant origin at pH 5-9 and temperature of 53± 5°C under stirring for 30 min to 6 h; inactivating the enzyme by a known manner; neutralizing the pH value of the slurry, separating the solids by a known manner and drying the clarified liquor so obtained to get the said hydrolysate having *non*-defectable lipoxygenase and urease activities.

### DESCRIPTION OF THE INVENTION

Accordingly, the present invention provides a process for the preparation of protein hydrolysate from soy flour, said process comprising: hydrolyzing aqueous slurry of defatted soy flour containing 6-30% solid content w/v using proteolytic enzyme of plant origin at pH 5-9 and temperature of 53± 5°C under stirring for 30 min to 6 h; inactivating the enzyme by a known manner; neutralizing the pH value of the slurry; separating the solids by a known manner and drying the clarified liquor so obtained to get the said hydrolysate, having non-detectable lipoxygenase *and* urease activities.

In an embodiment of the present invention, the solid content of the slurry is 20% w/v.

In another embodiment of the present invention, the plant origin proteolytic enzyme is selected from the group comprising of papain and bromelin.

In still another embodiment of the present invention, 0.4-0.6% w/w of the proteolytic enzyme is added to the soy flour.

In yet another embodiment of the present invention, the hydrolysis is effected for a period of 3-4 hours.

In one more embodiment of the present invention, the drying is effected by freeze drying, spray drying and drum drying.

In one another embodiment of the present invention, the protein hydrolysate produced has decreased bitterness.

In an embodiment of the present invention, the protein hydrolysate produced is less hygroscopic in nature.

In another embodiment of the present invention, the protein hydrolysate has 2- 2.2g/100m1 bitterness recognition threshold.

In still another embodiment of the present invention, the protein hydrolysate produced has low mineral content.

In one more embodiment of the present invention, high yield of protein hydrolysate with 30 to 35% degree of hydrolysis is obtained from the raw material taken.

In one another embodiment of the present invention, a protein hydrolysate having creamy color and a yield of 20 to 25% (on flour basis) is obtained.

In an embodiment of the present invention, the protein hydrolysate has 3.0 to 5.0% moisture, 8.0 to 8.5% nitrogen and 30.0-35.0% degree of hydrolysis.

In another embodiment of the present invention, the protein hydrolysate obtained has 25-30 trypsin inhibitor units/mg activity, 95 to 98% Nitrogen Solubility Index and 1.0 to 1.4% of salt content.

According to the present invention, lipoxygenase lipoxygenase and urease activities of the protein hydrolysate are not detectable.

In yet another embodiment of the present invention, the amino acid composition of the protein hydrolysate is similar to the amino acid makeup as that of the starting material.

In one more embodiment of the present invention, the protein hydrolysate retained the nutrition value as in the starting material.

In an embodiment of the present invention, the solubility of the protein hydrolysate is independent of the pH value.

In still another embodiment of the present invention, the protein hydrolysate has 3 to 5% moisture, 8 to 8.5% nitrogen and 30 to 35% degree of hydrolysis, 20 to 30 trypsin inhibitor units/mg activity, 95 to 98% Nitrogen Solubility Index and 1 to 1.4% of salt content, wherein the lipoxygenase and urease activities of the protein hydrolysate are not detectable.

In one more embodiment of the present invention, the protein hydrolysate has 2 to 2.2g/100ml bitterness recognition threshold.

In an embodiment of the present invention, the amino acid composition of the protein hydrolysate is similar to the amino acid makeup of the starting material.

In another embodiment of the present invention, the protein hydrolysate retained the nutrition value present in the starting material.

In yet another embodiment of the present invention, the solubility of the protein hydrolysate is independent of the pH value.

### The process involves following process steps:

### Defatted soy flour

Soybean flour is derived from clean round beans. The cleaned beans pass through a cracking process; the bean fragments are graded on sieves and aspirate system. The cleaned cracked meat passed through a conditioner cooker and flaked This is subjected to solvent extraction process. The extracted flakes were desolventized and ground to 100 mesh. The specification for soy flour consists of (a) Moisture = 9% by mass (max); (b) Protein on dry basis = 48% by mass (min); (c) The total ash on dry basis = 72% by mass (max); (d) Acid insoluble ash on dry basis = 0.4% by mass (max); (e) Fat on dry basis = 1.5% by mass; (f) Crude fibre on dry basis = 4.2% by mass (max); (g) Aflatoxin = 30 ppb (max); (h) Residual solvent = 170 ppm; (I) Total bacterial count per gram = 50,000; (j) Coliform bacteria/g =10; and (k) Salmonella bacterial - NiL

### Papain

The specification of the plant thiol protease papain is to obtain commercially available food grade enzyme having proteolytic activity not less than 2,000 tyrosine units (TU)/mg proteolytic activity.

### Measurement of Degree of Hydrolysis

Trinitrobenzenesulphonic acid (TNBS) procedure, is an accurate, reproducible and generally applicable procedure for determining the degree of hydrolysis of food protein hydrolysates. The protein hydrolysate is dissolved /dispersed in hot 1% sodium dodecyl sulphate to a concentration of 0.25 - 2.5 x 10⁻³ aminoequivalents/L. A sample solution 0.25 ml) is mixed with 2 ml of 0.2125 M sodium phosphate buffer (pH 8.2) and 2 ml of 0.1% Trinitrobenzenesulphonic acid, followed by incubation in the dark for 60 min at 50 C- The reaction is quenched by adding 4 ml. Of 0.10 N hydrochloric acid (HCl) and the absorbance is read at 340nm. A 1.5mM L-leucine solution is used as the standard. Transformation of the measured leucine amino equivalents to a degree of hydrolysis is carried out by means of a standard curve for each particular protein substrate (Adler Nissen, J. (1979) J. Agri. Food Chem. 27, 6,1256-1262).

Defatted soybean flour was dispersed in water with a suitable solvent to solute ratio and the pH of the dispersion was adjusted using 6N sodium hydroxide or 6N hydrochloric acid. This was kept stirring for a few minutes with mechanical stirrer and the temperature raised to 50 - 55° C. At this stage 0.4-0.6 (w%) of papain on the basis of soy flour was added and stirring continued for 3-4 hours. At the end of the above time interval the temperature of the slurry was raised to 90-95°C for 5-10 minutes. The slurry was cooled to room temperature and the insoluble carbohydrate rich fraction in the dispersion was removed by centrifugation. The clarified protein hydrolysate was spray dried to obtain protein hydrolysate.

The following examples are given by way of illustrations of the present invention and should not be construed to limit the scope of the present invention.

### Example 1

100 g of defatted soy flour is dispersed in 500 ml of water and the pH of the dispersion was adjusted to 5.5 using 1N HCl. The solution stirred with mechanical stirrer and then the temperature raised to 50°C by heating the solution. 500 mg of papain was added and stirring continued for 3 hrs. The enzyme was inactivated by boiling for 5 min. The pH of the hydrolysate was adjusted to 6.8 using 6N NaOH. The slurry was cooled and centrifuged. The clear solution was spray dried. The yield was 24% (on flour basis) and degree of hydrolysis was 30%.

### Example 2

300 g of defatted soy flour is dispersed in 1500 ml of water and the pH of the dispersion was adjusted to 5.5 using 1N HCl. The solution stirred with mechanical stirrer and then the temperature raised to 55°C. 1.5g of papain was added and stirring continued for 3 h. The enzyme was inactivated by boiling for 5 min. The pH of the hydrolysate was adjusted to 6.8 using 6N NaOH. The slurry was cooled and centrifuged. The clear solution was spray dried. The yield was 21% (on flour basis) and degree of hydrolysis was 30%.

### Example 3

1 kg g of defatted soy flour was dispersed in 5000 ml of water and the pH of the dispersion was adjusted to 5.0.using 1N HC1. The solution stirred with mechanical stirrer and then the temperature raised to 50°C. 5 g of papain was added and stirring continued for 4 hrs. The enzyme was inactivated by boiling for 5 min. The pH of the hydrolysate was adjusted to 6.5 using 6N NaOH. The slurry was cooled and centrifuged. The clear solution was spray dried. The yield was 20% (on flour basis) and degree of Hydrolysis was 30%.

The particle size of the soy flour, ratio of enzyme to substrate, temperature, pH and time interval controls the end of enzymatic hydrolysis resulting into minimizing bitterness of the hydrolysate.

The soya protein hydrolysate obtained has creamy colour and an yield of 20-25% (on flour basis). The product has 3.0-5.0% moisture, 8.0-8.5% nitrogen and 30.0-35.0% degree of hydrolysis (TNBS procedure).

The soy protein hydrolysate obtained has 25-30 trypsin inhibitor Unit/mg (TIU/mg) activity, 95-98% nitrogen solubility index, 1.0-1.4% of salt content (measured as Cl⁻ ions) and 2 - 2.2 g /100 ml bitterness recognition threshold. The lipoxygenase and urease activities were not detectable. The amino acid composition of the soy protein hydrolysate obtained was similar to the amino acid make up of starting raw material thereby retaining the nutritional value. The protein hydrolysate is less bitter compared to protein hydrolysate obtained from casein and is less hygroscopic in nature.

### The main advantages of this invention are:

1. The enzyme employed is a food grade commercially available acceptable plant enzyme with broad specificity resulting in 30- 35% degree of hydrolysis.
2. The product can be a good additive without imparting any undesirable flavour for the finished product.
3. Hydrolysate has a solubility which is independent of pH making it a suitable additive either in acid pH or alkaline pH.
4. The final product is in the dry form suitable for different food formulations and easy to handle.

## Claims

1. A process for the preparation of protein hydrolysate from soy flour, said process comprising: hydrolyzing aqueous slurry of defatted soy flour containing 6-30% solid content w/v using proteolytic enzyme of plant origin at pH 5-9 and temperature of 53± 5°C under stirring for 30 minutes to 6 hours; inactivating the enzyme by a known manner; neutralizing the pH value of the slurry; separating the solids by a known manner and drying the clarified liquor so obtained to get the said hydrolysate having non-detectable lipoxygenase and urease activities.

2. A process as claimed in claim 1, wherein the solid content of the slurry is 20% w/v.

3. A process as claimed in claim 1, wherein the plant origin proteolytic enzyme is selected from the group comprising of papain and bromelin.

4. A process as claimed in claim 1, wherein 0.4-0.6% w/w of the proteolytic enzyme is added to the soy flour.

5. A process as claimed in claim 1, wherein the hydrolysis is effected for a period of 3-4 hours.

6. A process as claimed in claim 1, the drying is effected by freeze drying, spray drying and drum drying.

7. A process as claimed in claim 1, wherein the protein hydrolysate produced has decreased bitterness.

8. A process as claimed in claim 1, wherein the protein hydrolysate produced is less hygroscopic in nature.

9. A process as claimed in claim 1, wherein the protein hydrolysate has 2-2.2g/100ml bitterness recognition threshold.

10. A process as claimed in claim 1, wherein the protein hydrolysate produced has low mineral content.

11. A process as claimed in claim 1, wherein high yield of protein hydrolysate with 30 to 35% degree of hydrolysis is obtained from the raw material taken.

12. A process as claimed in claim 1, wherein protein hydrolysate obtained has creamy color and a yield of 20-25% (on flour basis).

13. A process as claimed in claim 1, wherein protein hydrolysate has 3.0 to 5.0% moisture, 8.0 to 8.5% nitrogen and 30.0-35.0% degree of hydrolysis.

14. A process as claimed in claim 1, wherein the protein hydrolysate obtained has 25-30 trypsin inhibitor units/mg activity, 95 to 98% Nitrogen Solubility Index and 1.0 to 1.4% of salt content.

15. A process as claimed in claim 1, wherein the amino acid composition of the protein hydrolysate was similar to the amino acid makeup as that of the starting material.

16. A process as claimed in claim 1, wherein the protein hydrolysate retained the nutrition value as in the starting material.

17. A process as claimed in claim 1, wherein the solubility of the protein hydrolysate is independent of the pH value.

18. A protein hydrolysate obtained from soy flour, comprising 20 to 30 trypsin inhibitor units/mg activity, 95 to 98% Nitrogen Solubility Index, I to 1.4% of salt content 3 to 5% moisture, 8 to 8.5% nitrogen and 30 to 35% degree of hydrolysis, wherein the lipoxygenase and urease activities are not detectable.

19. A protein hydrolysate as claimed in claim 18, further comprising 2 to 2.2g/100ml bitterness recognition threshold.

20. A protein hydrolysate as claimed in claim 18, wherein the amino acid composition of the protein hydrolysate is similar to the amino acid makeup of the starting material.

21. A protein hydrolysate as claimed in claim 18, wherein the protein hydrolysate retained the nutrition value present in the starting material.

22. A protein hydrolysate as claimed in claim 18, wherein the solubility of the protein hydrolysate is independent of the pH value.

## Patentansprüche

1. Verfahren zur Herstellung von Proteinhydrolysat aus Sojamehl, wobei dieses Verfahren Folgendes umfasst: das Hydrolysieren eines wässrigen Schlamms von entfettetem Sojamehl, enthaltend einen Feststoffgehalt von 6-30% w/v, unter Verwendung eines proteolytischen Enzyms pflanzlichen Ursprungs bei einem pH-Wert von 5-9 und einer Temperatur von 53±5°C unter 30-minütigem bis 6-stündigem Rühren; das Inaktivieren des Enzyms in einer bekannten Art und Weise; das Neutralisieren des pH-Werts des Schlamms; das Abtrennen der Feststoffe in einer bekannten Art und Weise und das Trocknen der so erhaltenen geklärten Flüssigkeit, um das Hydrolysat, das keine nachweisbare Lipoxygenase- und Urease-Aktivität aufweist, zu erhalten.

2. Verfahren, wie in Anspruch 1 beansprucht, wobei der Feststoffgehalt des Schlamms 20% w/v beträgt.

3. Verfahren, wie in Anspruch 1 beansprucht, wobei das proteolytische Enzym pflanzlichen Ursprungs aus der Gruppe, umfassend Papain und Bromelin, ausgewählt ist.

4. Verfahren, wie in Anspruch 1 beansprucht, wobei 0,4-0,6% w/w proteolytisches Enzym zum Sojamehl hinzugefügt wird.

5. Verfahren, wie in Anspruch 1 beansprucht, wobei die Hydrolyse für eine Dauer von 3-4 Stunden durchgeführt wird.

6. Verfahren, wie in Anspruch 1 beansprucht, wobei das Trocknen durch Gefriertrocknung, Sprühtrocknung und Trommeltrocknung erfolgt.

7. Verfahren, wie in Anspruch 1 beansprucht, wobei das hergestellte Proteinhydrolysat eine verminderte Bitterkeit aufweist.

8. Verfahren, wie in Anspruch 1 beansprucht, wobei das hergestellte Proteinhydrolysat in seiner Beschaffenheit weniger hygroskopisch ist.

9. Verfahren, wie in Anspruch 1 beansprucht, wobei das Proteinhydrolysat eine Bitterkeit-Erkennungsschwelle von 2-2,2 g/100 ml hat.

10. Verfahren, wie in Anspruch 1 beansprucht, wobei das hergestellte Proteinhydrolysat einen geringen Mineralstoffgehalt aufweist.

11. Verfahren, wie in Anspruch 1 beansprucht, wobei aus dem Rohmaterial, das genommen wird, eine hohe Ausbeute an Proteinhydrolysat mit einem Hydrolysegrad von 30 bis 35% erhalten wird.

12. Verfahren, wie in Anspruch 1 beansprucht, wobei das erhaltene Proteinhydrolysat cremefarben ist und eine Ausbeute von 20-25% (auf Basis von Mehl) hat.

13. Verfahren, wie in Anspruch 1 beansprucht, wobei Proteinhydrolysat eine Feuchtigkeit von 3,0 bis 5,0%, 8,0 bis 8,5% Stickstoff und einen Hydrolysegrad von 30,0 bis 35.0% aufweist.

14. Verfahren, wie in Anspruch 1 beansprucht, wobei das erhaltene Proteinhydrolysat eine Trypsininhibitoraktivität von 25-30 Einheiten/mg, einen Stickstofflöslichkeitsindex von 95 bis 98% und einen Salzgehalt von 1,0 bis 1,4% aufweist.

15. Verfahren, wie in Anspruch 1 beansprucht, wobei die Aminosäurezusammensetzung des Proteinhydrolysats dem Aminosäureaufbau des Ausgangsmaterials ähnelte.

16. Verfahren, wie in Anspruch 1 beansprucht, wobei das Proteinhydrolysat den Nährwert wie im Ausgangsmaterial bewahrte.

17. Verfahren, wie in Anspruch 1 beansprucht, wobei die Löslichkeit des Proteinhydrolysats vom pH-Wert unabhängig ist.

18. Proteinhydrolysat, das aus Sojamehl erhalten wurde, umfassend eine Trypsininhibitoraktivität von 20-30 Einheiten/mg, einen Stickstofflöslichkeitsindex von 95 bis 98%, einen Salzgehalt von 1 bis 1,4%, eine Feuchtigkeit von 3 bis 5%, 8 bis 8,5% Stickstoff und einen Hydrolysegrad von 30 bis 35%, wobei die Lipoxygenase- und Urease-Aktivitäten nicht nachweisbar sind.

19. Proteinhydrolysat, wie in Anspruch 18 beansprucht, welches weiters eine Bitterkeit-Erkennungsschwelle von 2-2,2 g/100 ml aufweist.

20. Proteinhydrolysat, wie in Anspruch 18 beansprucht, wobei die Aminosäurezusammensetzung des Proteinhydrolysats dem Aminosäureaufbau des Ausgangsmaterials ähnelt.

21. Proteinhydrolysat, wie in Anspruch 18 beansprucht, wobei das Proteinhydrolysat den im Ausgangsmaterial vorhandenen Nährwert bewahrte.

22. Proteinhydrolysat, wie in Anspruch 18 beansprucht, wobei die Löslichkeit des Proteinhydrolysats vom pH-Wert unabhängig ist.

## Revendications

1. Procédé de préparation d'un hydrolysat de protéines à partir de farine de soja, ledit procédé comprenant : l'hydrolyse d'une bouillie aqueuse de farine de soja dégraissée contenant une teneur en matières solides de 6-30 % en pds/Vol en utilisant une enzyme protéolytique d'origine végétale à pH 5-9 et une température de 53±5°C sous agitation pendant 30 minutes à 6 heures ; l'inactivation de l'enzyme d'une manière connue ; la neutralisation de la valeur de pH de la bouillie ; la séparation des matières solides d'une manière connue et le séchage de la liqueur clarifiée ainsi obtenue pour obtenir ledit hydrolysat possédant des activités lipoxygénase et uréase indétectables.

2. Procédé selon la revendication 1, dans lequel la teneur en matières solides de la bouillie est de 20 % en pds/Vol.

3. Procédé selon la revendication 1, dans lequel l'enzyme protéolytique d'origine végétale est choisie dans le groupe comprenant la papaïne et la broméline.

4. Procédé selon la revendication 1, dans lequel 0,4-0,6 % en pds/pds de l'enzyme protéolytique est ajouté à la farine de soja.

5. Procédé selon la revendication 1, dans lequel l'hydrolyse est effectuée pendant une période de 3-4 heures.

6. Procédé selon la revendication 1, dans lequel le séchage est effectué par lyophilisation, séchage par atomisation ou séchage en tambour.

7. Procédé selon la revendication 1, dans lequel l'hydrolysat de protéines préparé présente une amertume réduite.

8. Procédé selon la revendication 1, dans lequel l'hydrolysat de protéines préparé est moins hygroscopique de nature.

9. Procédé selon la revendication 1, dans lequel l'hydrolysat de protéines présente un seuil de reconnaissance de l'amertume de 2-2,2 g/100 ml.

10. Procédé selon la revendication 1, dans lequel l'hydrolysat de protéines préparé a une faible teneur en minéraux.

11. Procédé selon la revendication 1, dans lequel un rendement élevé en hydrolysat de protéines avec un degré d'hydrolyse de 30 à 35 % est obtenu à partir de la matière première utilisée.

12. Procédé selon la revendication 1, dans lequel l'hydrolysat de protéines obtenu présente une couleur crémeuse et un rendement de 20-25 % (rapporté à la farine).

13. Procédé selon la revendication 1, dans lequel l'hydrolysat de protéines présente un taux d'humidité de 3,0 à 5,0 %, une teneur en azote de 8,0 à 8,5 % et un degré d'hydrolyse de 30,0-35,0 %.

14. Procédé selon la revendication 1, dans lequel l'hydrolysat de protéines obtenu présente une activité de 25-30 unités d'inhibiteur de trypsine/mg, un indice de solubilité de l'azote de 95 à 98 % et une teneur en sels de 1,0 à 1,4 %.

15. Procédé selon la revendication 1, dans lequel la composition en acides aminés de l'hydrolysat de protéines est similaire à l'apport en acides aminés de la matière première.

16. Procédé selon la revendication 1, dans lequel l'hydrolysat de protéines a conservé la valeur nutritionnelle de la matière première.

17. Procédé selon la revendication 1, dans lequel la solubilité de l'hydrolysat de protéines est indépendante de la valeur de pH.

18. Hydrolysat de protéines obtenu à partir de farine de soja, présentant une activité de 20 à 30 unités d'inhibiteur de trypsine/mg, un indice de solubilité de l'azote de 95 à 98 %, une teneur en sels de 1 à 1,4 %, un taux d'humidité de 3 à 5 %, une teneur en azote de 8 à 8,5 % et un degré d'hydrolyse de 30 à 35 %, dans lequel les activités lipoxygénase et uréase sont indétectables.

19. Hydrolysat de protéines selon la revendication 18, présentant en outre un seuil de reconnaissance de l'amertume de 2 à 2,2 g/100 ml.

20. Hydrolysat de protéines selon la revendication 18, dans lequel la composition en acides aminés de l'hydrolysat de protéines est similaire à l'apport en acides aminés de la matière première.

21. Hydrolysat de protéines selon la revendication 18, l'hydrolysat de protéines conservant la valeur nutritionnelle présente dans la matière première.

22. Hydrolysat de protéines selon la revendication 18, la solubilité de l'hydrolysat de protéines étant indépendante de la valeur de pH.
